(19) **Europäisches Patentamt**
**European Patent Office**
**Office européen des brevets**

(11) **EP 2 147 200 B1**

(12) **FASCICULE DE BREVET EUROPEEN**

(45) Date de publication et mention
de la délivrance du brevet:
**06.11.2013 Bulletin 2013/45**

(51) Int Cl.:
*F01N 11/00* (2006.01)    *F01N 3/20* (2006.01)
*F01N 9/00* (2006.01)

(21) Numéro de dépôt: **08805777.3**

(22) Date de dépôt: **14.05.2008**

(86) Numéro de dépôt international:
**PCT/FR2008/050829**

(87) Numéro de publication internationale:
**WO 2008/149015 (11.12.2008 Gazette 2008/50)**

(54) **PROCEDE ET DISPOSITIF D'ADAPTATION D'UN ESTIMATEUR DE TEMPERATURE D'UN SYSTEME DE POST-TRAITEMENT DES GAZ D'ECHAPPEMENT**

VERFAHREN UND VORRICHTUNG ZUR ANPASSUNG DER TEMPERATURSCHÄTZVORRICHTUNG EINES ABGASNACHBEHANDLUNGSSYSTEMS

METHOD AND DEVICE FOR ADAPTING THE TEMPERATURE ESTIMATOR OF AN EXHAUST GAS POST PROCESSING SYSTEM

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **18.05.2007 FR 0755139**

(43) Date de publication de la demande:
**27.01.2010 Bulletin 2010/04**

(73) Titulaire: **Renault S.A.S.**
**92100 Boulogne-Billancourt (FR)**

(72) Inventeurs:
• **BARRILLON, Pascal**
  **F-92130 Issy Les Moulineaux (FR)**
• **POILANE, Emmanuel**
  **F-91290 Arpajon (FR)**

(56) Documents cités:
**EP-A- 1 067 279        US-A- 5 979 161**
**US-A1- 2005 103 099**

**Description**

L'invention concerne le domaine des systèmes de post traitement, et plus particulièrement, l'estimation des températures dans les systèmes de post traitement.

Les moteurs à combustion interne produisent des gaz d'échappement qui contiennent des espèces polluantes, telles que des oxydes d'azote, des hydrocarbures imbrûlés, du monoxyde de carbone et des particules de suie. Les taux de rejet admis de ces différentes espèces polluantes sont strictement règlementés et sujets à révisions périodiques à la baisse.

Pour abaisser les émissions de ces différentes espèces polluantes, on utilise depuis de nombreuses années des systèmes de post traitement insérés dans la ligne d'échappement. Les systèmes de post traitement comprennent un matériau catalytique apte à décomposer les différentes espèces polluantes en composés neutres pour la santé, et à stocker les suies pour combustions périodiques. Ces systèmes de post traitement fonctionnent de manière discontinue, alternant les phases de stockage et les phases de décomposition.

Pour obtenir une bonne efficacité du système de post traitement, une certaine température est nécessaire. Cette température est atteinte par l'augmentation de la chaleur déposée par le flux de gaz d'échappement traversant le système de post traitement, par l'énergie libérée lors de la décomposition des espèces polluantes et par l'utilisation de l'inertie thermique du système de post traitement.

Le système de post traitement peut également être pollué par les oxydes de soufre. La régénération par désulfatation requiert des températures supérieures aux températures de régénération des systèmes de post traitement et sont proches des limites d'endommagement du système de post traitement. Le contrôle de la température du système de post traitement est ainsi crucial, une régulation de la température en sortie n'étant pas suffisante pour contrôler les effets combinés de l'inertie thermique du système de post traitement, de la libération d'énergie thermique lors des réactions de régénération et de l'alternance rapide des modes de combustion nécessaires à la régénération.

La demande de brevet FR 2 853 691 décrit une méthode de modélisation de la température d'un piège catalytique en fonction des paramètres de fonctionnement du moteur, de l'environnement du véhicule et du piège catalytique lui-même.

Cependant cette demande de brevet présente plusieurs inconvénients. D'une part, elle est limitée aux systèmes de traitement des oxydes d'azote. D'autre part, les calculs à réaliser et les paramètres à calibrer sont nombreux et complexes, nécessitant une forte puissance de calcul et une grande quantité de mémoire. De plus, aucun moyen n'est prévu pour estimer et corriger les dérives et dispersions pouvant apparaître lors de l'alternance des modes de combustion.

La demande de brevet EP 1 067 279 décrit un procédé et un système de détermination et de régulation de la température d'un piège à oxydes d'azote. L'estimation de la température du catalyseur est améliorer par une mise au point du modèle sur banc d'essai.

La demande de brevet US 2005/103099 décrit un système de post traitement avec des moyens de détermination de l'exothermes mesurées et modélisées. Les deux résultats sont comparés et la différence est utilisée pour diagnostiquer le vieillissement du système de post traitement.

L'objet de l'invention est d'estimer les dérives des modes de combustion utilisés lors de la régénération du système de post traitement.

Un autre objet de l'invention est de corriger des paramètres des modes de combustion afin de tenir compte des dérives déterminées.

Selon un mode de mise en oeuvre, on définit un procédé de correction de l'estimation par modèle physique embarqué de l'état thermique d'un système de post traitement implanté dans la ligne d'échappement d'un moteur à combustion interne. Le procédé permet de corriger l'effet des dérives et dispersions des différents organes ayant un impact sur l'état thermique du système de post traitement, en déterminant une énergie potentielle corrigée dépendant des énergies potentielles mesurées et modélisées.

On peut déterminer l'énergie potentielle mesurée en réalisant un bilan thermique à partir des mesures de la température en entrée du système de post traitement, de la température en sortie du système de post traitement et du mode de fonctionnement du moteur à combustion interne.

On peut déterminer l'énergie potentielle modélisée d'après le mode de fonctionnement du moteur à combustion interne et d'après le modèle physique mémorisé.

On peut déterminer une énergie potentielle corrigée en réalisant le produit de l'énergie potentielle modélisée et d'un facteur de correction issu de la somme pondérée du coefficient de correction du modèle physique de l'itération précédente et du rapport entre les énergies potentielles mesurées et modélisées.

Selon un mode de réalisation, on définit un dispositif de correction de l'estimation par modèle physique embarqué de l'état thermique d'un système de post traitement implanté dans la ligne d'échappement d'un moteur à combustion interne pouvant fonctionner selon différents modes. Le dispositif de correction comprend un moyen de correction du modèle physique apte à modifier le résultat des calculs issus dudit modèle physique en fonction du signal reçu du moyen de calcul contenant le modèle physique et du signal émis par le moyen de détermination de l'énergie potentielle mesurée.

Le dispositif peut comprendre un moyen de calcul contenant un modèle physique de l'énergie libérée lors de la régénération capable de déterminer l'énergie libérée lors de la régénération en fonction du mode de fonctionnement du moteur à combustion interne.

Le dispositif peut également comprendre un capteur de température en amont du système de post traitement.

Le dispositif peut comprendre en outre un capteur de température en aval du système de post traitement.

Le moyen de détermination de l'énergie potentielle mesurée peut recevoir des signaux des capteurs de température en amont et en aval du système de post traitement afin de déterminer l'énergie libérée lors de la régénération en fonction de la température en amont et en aval du système de post traitement.

Le système de post traitement peut comprendre un piège catalytique.

Selon un autre aspect de l'invention, on définit un mode d'utilisation d'un dispositif pour diagnostiquer le vieillissement du système de post traitement et/ou la dérive des modes de fonctionnement du moteur.

D'autres buts, caractéristiques et avantages de l'invention apparaîtront à la lecture de la description suivante, donnée uniquement à titre d'exemple non limitatif et faite en référence aux dessins annexés sur lesquels :

- la figure 1 illustre le système d'adaptation d'un estimateur de températures et l'estimateur de température associé.
- la figure 2 illustre la modélisation en réacteurs parfaitement agités du système de post traitement ainsi que le placement des capteurs de température.

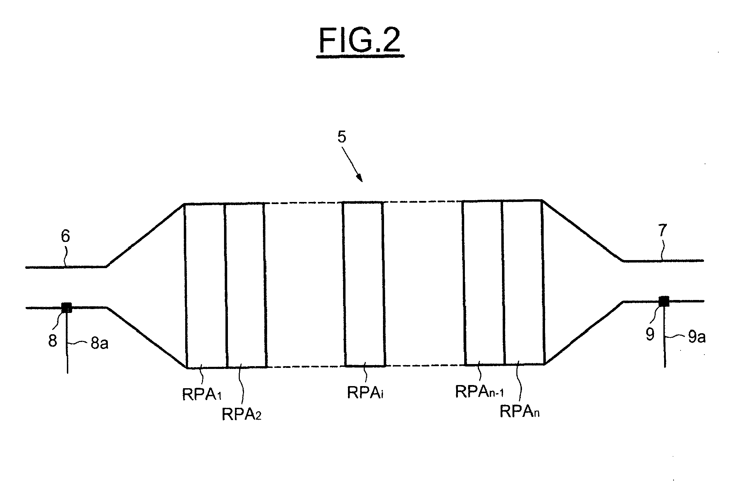

Sur la figure 2, les gaz d'échappement issus de la combustion, pénètrent dans le système de post traitement 5 par une conduite d'échappement 6 et sont évacués par une autre conduite 7. Un premier capteur de température 8 est disposé en amont du système de post traitement 5 et est relié au système de correction par la connexion 8a. Un deuxième capteur de température 9 est disposé en aval du système de post traitement 5 et est relié au système de correction par la connexion 9a.

Lors du fonctionnement normal du moteur à combustion interne, le système de post traitement 5 piège différentes espèces polluantes. Périodiquement une régénération du système de post traitement est nécessaire afin de convertir les espèces polluantes en espèces neutres pour la santé, et pour régénérer les propriétés de stockage du système de post traitement 5. Lors de cette régénération, une alternance de deux modes de combustion est déclenchée afin d'élever la température à l'intérieur du système de post traitement 5 de façon à déclencher les réactions de régénération. Les réactions de régénération permettent de transformer les espèces polluantes piégées dans le système de post traitement 5 en espèces moins nocives qui peuvent alors être évacuées avec les gaz d'échappement. Suivant le type de réaction catalytique à déclencher, la température requise est plus ou moins élevée. Un endommagement du système de post traitement peut intervenir si la température dépasse certains seuils, par exemple une température supérieure à 750°C. Pour éviter cela, des moyens de calcul estiment la température à l'intérieur du système de post traitement 5 en fonction de la composition des gaz d'échappement déterminée pour le mode de fonctionnement courant.

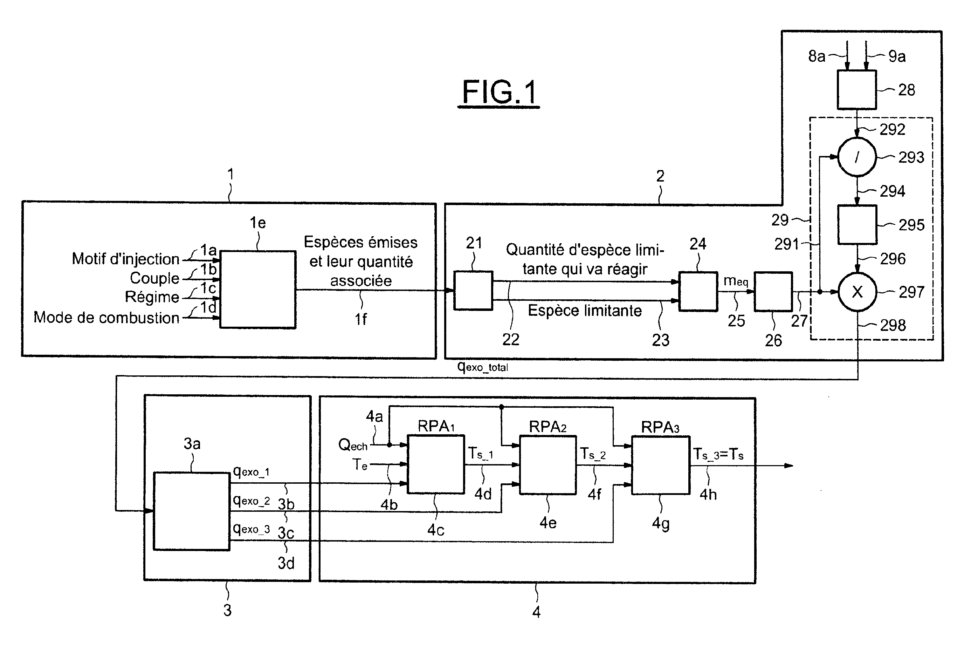

Le système de détermination de la température, décrit sur la figure 1, comprend un moyen 1 d'estimation des espèces polluantes, un moyen 2 de détermination de l'énergie libérée lors de la régénération, un moyen 3 de calcul de la répartition de l'énergie libérée entre les différents réacteurs et un moyen 4 de détermination de la température de sortie des différents réacteurs.

Le moyen 1 d'estimation des espèces polluantes comprend un moyen de modélisation le recevant en entrée des paramètres caractérisant le fonctionnement du moteur à combustion interne, tels que le motif d'injection par la liaison 1a, le couple délivré par la liaison 1b, le régime moteur par la liaison 1c et le mode de combustion par la liaison 1d. Le mode de combustion représente un mode de fonctionnement particulier du moteur. On peut citer par exemple, un mode de régénération du filtre à particule ou un mode à mélange enrichi. Un mode de combustion peut comprendre une ou plusieurs phases requérant, par exemple, des quantités de carburant différentes, des nombres et des fréquences d'injections de carburant différentes. Ces paramètres forment un motif d'injection. La cartographie 1e des émissions polluantes peut prendre également en compte la quantité de carburant ou de réducteurs injectés dans la ligne d'échappement en aval du collecteur d'échappement. Le moyen de modélisation le émet en sortie par la liaison 1f la nature et le taux d'émission des différentes espèces produites lors de la combustion.

Le moyen 2 de détermination de l'énergie libérée lors de la régénération comprend un moyen 21 de détermination des espèces limitantes, un moyen 24 de détermination de l'équivalent énergétique, un moyen 26 de calcul de l'énergie totale libérée, un moyen 29 de correction du modèle physique et un moyen de calcul 28. Le moyen 21 de détermination des espèces limitantes reçoit sur au moins une de ses entrées la nature et le taux d'émission des espèces polluantes par la liaison 1f provenant de la cartographie 1e des émissions polluantes.

Lors de la régénération, les réactions chimiques mettent en jeu des quantités déterminées de réactifs. Un ou plusieurs de ces réactifs peuvent ne pas être présents en quantité suffisante pour que tous les réactifs soient consommés. On qualifie d'espèce limitante les réactifs présents en quantité insuffisante par rapport aux autres espèces, compte tenu de la réaction chimique.

Le moyen 21 de détermination des espèces limitantes émet sur au moins une de ses sorties la nature de l'espèce limitante lors de la régénération par la liaison 23 et la quantité de cette espèce limitante qui va réagir par la liaison 22. Les liaisons 22 et 23 sont reliées au moyen 24. Le moyen 24 de détermination de l'équivalent énergétique émet sur au moins une de ses sorties, par la liaison 25 à destination du moyen 26, la quantité équivalente d'espèce limitante correspondant aux quantités des différentes espèces qui vont réagir compte tenu de la quantité et de la nature de l'espèce limitante. Le moyen 26 de calcul de l'énergie totale libérée détermine l'énergie totale libérée lors de la régénération ΔHmod et émet la valeur correspondante par au moins une de ses sorties à destination du multiplicateur 297 par la liaison 27.

Le moyen de calcul 28 reçoit les mesures de température provenant du capteur 8 par la connexion 8a et du capteur 9 par la connexion 9a. Le moyen de calcul 28 détermine une valeur de l'énergie totale libérée ΔHmes lors des réactions de régénération à partir des températures mesurées et la transmet par la connexion 292 au diviseur 293. Le diviseur 293 reçoit la valeur ΔHmod par la dérivation 291 de la connexion 27. Le diviseur 293 détermine le coefficient α issu du rapport entre les valeurs estimées ΔHmod et mesurées AHmes de l'énergie totale libérée lors des réactions de régénération et émet la valeur correspondante par la connexion 294. Le moyen de calcul 295 détermine la correction mod(i) permettant de corriger les dérives et dispersions en fonction de la valeur de α. Le multiplicateur 297 reçoit sur une entrée la valeur de mod(i) par la  connexion 296 et par au moins une autre entrée la valeur estimée ΔHmod de l'énergie totale libérée lors des réactions de régénération et émet en sortie une valeur corrigée ΔHcorr de l'énergie totale libérée lors des réactions de régénération par la connexion 298.

Le moyen 2 de détermination de l'énergie totale libérée lors de la régénération est capable de déterminer l'énergie totale libérée lors de la régénération ΔHmod engendré par les réactions d'oxydation et de réduction des émissions polluantes lors de la régénération. Le moyen 2 de détermination peut prendre également en compte la quantité de carburant ou de réducteurs injectés dans la ligne d'échappement en aval du collecteur d'échappement. Le moyen 21 de détermination des espèces limitantes détermine la nature de l'espèce limitante. La décomposition des espèces polluante lors de la régénération fait appel à des réactions chimiques dont la stoechiométrie est connue. Il est alors possible de déterminer les espèces sous-stoechiométriques. La connaissance des espèces sous-stoechiométriques permet également de déterminer la quantité de l'espèce limitante qui réagira.

En fonction des données reçues, le moyen 24 de détermination de l'équivalent énergétique détermine le mode de fonctionnement courant et la quantité des différentes espèces qui vont réagir. Selon la teneur des différentes émissions polluantes, plusieurs modes de fonctionnement existent. Soit l'oxygène n'est pas l'espèce limitante, et le mode de fonctionnement est dit mode pauvre. Soit l'oxygène est l'espèce limitante, et le mode de fonctionnement est dit mode riche. Le moyen 24 de détermination estime alors une masse de l'espèce limitante dont la régénération libèrera une quantité d'énergie comparable à la quantité d'énergie libérée lors de la régénération des différentes espèces qui vont réagir. La masse d'espèce limitante ainsi déterminée est appelée masse équivalente. Le moyen 24 émet la valeur de la masse équivalente vers le moyen 26 de calcul de l'énergie totale libérée.

Le moyen 26 de calcul de l'énergie totale libérée comprend une zone mémoire comprenant les chaleurs de réaction des différents polluants pouvant être émis par le moteur à combustion interne. Selon  la nature de l'espèce limitante reçue du moyen 24, le moyen 26 détermine l'énergie totale libérée ΔHmod.

Ainsi, selon le mode de fonctionnement, par exemple en mode pauvre ou en mode riche, seule la valeur de la chaleur de réaction de l'espèce limitante change. Une seule constante est mémorisée, limitant l'espace mémoire nécessaire.

En mode de fonctionnement pauvre, la puissance Wmod et l'énergie totale ΔHmod libérées lors de la régénération sont exprimées en fonction du débit massique et du pouvoir calorifique de l'espèce limitante, par exemple du monoxyde de carbone.

$$W_{\mathrm{mod}} = dm_{COeq} \cdot PCI_{CO}$$

On obtient l'énergie en intégrant la puissance sur une durée, entre t0 et tf.

$$\Delta H_{\mathrm{mod}} = \int_{t0}^{tf} W_{\mathrm{mod}} \cdot dt = \int_{t0}^{tf} dm_{COeq} . PCI_{CO} \cdot dt$$

avec

$dm_{COeq}$ = débit massique de monoxyde de carbone équivalent au débit des différentes espèces polluantes
$PCI_{CO}$ = pouvoir calorifique du monoxyde de carbone lors de la régénération

En mode de fonctionnement riche, la puissance Wmod et l'énergie totale ΔHmod libérée lors de la régénération sont exprimées en fonction du débit massique et de la chaleur de réaction de l'oxygène pour une composition des gaz donnée.

$$W_{\mathrm{mod}} = dm_{O2eq} \cdot PCI_{O2}$$

$$\Delta H_{\mathrm{mod}} = \int_{t0}^{tf} W_{\mathrm{mod}} \cdot dt = \int_{t0}^{tf} dm_{O2eq} . PCI_{O2} \cdot dt$$

avec

$dm_{O2}$ = débit massique de l'oxygène

$CR_{O2}$ = chaleur de réaction de l'oxygène pour une composition des gaz donnée

L'énergie totale libérée ΔHmod permet de déterminer les températures en plusieurs points du système de post traitement. Cependant, des dérives et des dispersions des modes de combustion peuvent apparaître au cours de la vie du véhicule. Suivant leur ampleur, ces dérives et dispersions peuvent fausser l'estimation des températures dans le système de post traitement jusqu'au point où une partie des températures locales du système de post traitement dépasse la température d'endommagement, provoquant la ruine du système de post traitement.

Pour compenser les dérives, on réalise un bilan d'énergie à partir de températures mesurées en amont et en aval du système de post traitement par des capteurs de températures 8 et 9, et on recale le modèle sur la situation observée au travers des capteurs de température. Bien que le taux d'échantillonnage des capteurs de température soit élevé devant la dynamique du système, le système fonctionne sur des quantités d'énergie et non des puissances instantanées de façon à réduire l'influence du bruit de mesure.

Le moyen de calcul 28 estime l'énergie totale libérée ΔHmes lors de la régénération dans le système de post traitement 5, en réalisant le bilan de l'énergie apportée par les gaz d'échappement et l'énergie libérée lors de la régénération. Le bilan de conservation des puissances thermiques peut s'écrire de la façon suivante :

$$Pr + Pe = Ps + \Delta Pcata$$

avec

$Ps = Q_{ech}(t) \cdot C_{Pgaz}(t) \cdot T_s(t)$ : la puissance véhiculée par les gaz sortant du système de post traitement 5

$Pr = W_{\mathrm{mod}}(t)$ : la puissance dégagée par les réactions de régénération

$Pe = Q_{ech}(t) \cdot C_{Pgaz}(t) \cdot T_e(t)$ : la puissance véhiculée par les gaz entrant dans le système de post traitement 5

$$\Delta Pcata =$$
$$1/dt \cdot \left( m_{cata} \left( C_{Pcata}(t+dt) T_{cata}(t+dt) - C_{Pcata}(t) T_{cata}(t) \right) + \dots m_{gaz} \left( C_{Pgaz}(t+dt) T_{cata}(t+dt) - C_{Pgaz}(t) T_{cata}(t) \right) \right) :$$

la variation de puissance dans le système de post traitement 5

Qech = débit massique des gaz d'échappement

$Cp_{gaz}$ = Capacité calorifique massique à pression constante des gaz d'échappement

$T_{cata}$ = Température du système de post traitement

Te = Température des gaz en entrée du réacteur courant RPAi

$m_{cata}$ = Masse de système de post traitement dans le réacteur courant RPAi

$Cp_{cata}$ = Capacité calorifique massique à pression constante du système de post traitement

En négligeant la masse des gaz devant la masse du système de post traitement, on obtient :

$$\Delta Pcata \approx 1/dt \cdot m_{cata} \left( C_{Pcata}(t+dt) T_{cata}(t+dt) - C_{Pcata}(t) T_{cata}(t) \right)$$

Dans ce bilan d'énergie, les pertes sont négligées.

En replaçant, on obtient :

$$W_{exo}(t) =$$

$$Q_{ech}(t)C_{Pgaz}(t)T_s(t) + W_{pertes}(t) - Q_{ech}(t)C_{Pgaz}(t)T_e(t) + m_{cata}\frac{(C_{Pcata}(t+dt)T_{cata}(t+dt) - C_{Pcata}(t)T_{cata}(t))}{dt} \quad \textbf{(1)}$$

Pour les deux modes de fonctionnement, le moyen de calcul 28 calcule l'énergie potentielle d'après les mesures des capteurs de température 8 et 9. Pour cela, le moyen de calcul 28 intègre la relation (1) entre t0 et tf, généralement la durée entre deux mesures de température. On obtient alors les expressions suivantes.

$$\Delta H_{mes} = \int_{t0}^{tf} W_{exo} \cdot dt$$

$$\Delta H_{mes} = m_{cata} \cdot \left(Cp_{cata}(t_f) \cdot T_{cata}(t_f) - Cp_{cata}(t_0) \cdot T_{cata}(t_0)\right) + \int_{t0}^{tf} Q_{ech} \cdot Cp_{gaz}^{out} \cdot T_s \cdot dt - \int_{t0}^{tf} Q_{ech} \cdot Cp_{gaz}^{in} \cdot T_e \cdot dt \quad \textbf{(2)}$$

Le bilan d'énergie potentielle (2) permet d'obtenir une valeur d'énergie potentielle dite mesurée ΔHmes, c'est-à-dire estimée d'après les mesures de température effectuées sur le système.

Afin de déterminer la présence d'une dérive ou d'une dispersion des modes de combustion, le moyen de calcul 293 compare l'énergie potentielle mesurée ΔHmes à l'énergie potentielle calculée ΔHmod par le modèle en déterminant un coefficient α reflétant l'erreur sur l'énergie libérée calculée due à une dérive des injecteurs. Le coefficient α peut être déterminé par exemple en réalisant le rapport des deux énergies.

$$\alpha = \frac{\Delta H_{mes}}{\Delta H_{mod}} =$$

$$\frac{m_{cata} \cdot \left(Cp_{cata}(t_f) \cdot T_{cata}(t_f) - Cp_{cata}(t_0) \cdot T_{cata}(t_0)\right) + \int_{t0}^{tf} Q_{ech} \cdot Cp_{gaz}^{out} \cdot T_s \cdot dt - \int_{t0}^{tf} Q_{ech} \cdot Cp_{gaz}^{in} \cdot T_e \cdot dt + \int_{t0}^{tf} W_{pertes} \cdot dt}{\Delta H_{mod}}$$

Si α n'est pas égal à un, dans une certaine gamme de tolérances, une dérive est présente. α peut alors être utilisé pour recaler le modèle. Pour cela, le moyen de calcul 295 définit une relation de récurrence définissant un coefficient Mod(i).

$$Mod(i) = (1 - pond) \cdot Mod(i-1) + pond \cdot \alpha(i)$$

avec i = itération de calcul en cours
pond = coefficient de relaxation

Le coefficient Mod(i) obtenu est utilisé par le moyen de calcul 297 pour corriger l'estimation de la puissance libérée lors de la régénération $W_{exo}$.

$$W_{exo\_corr}(i) = W_{exo}(i) \cdot Mod(i)$$

En mode de fonctionnement pauvre, la puissance totale libérée lors de la régénération après correction sera :

$$W_{exo\_corr}(i) = Mod(i) \cdot dm_{COeq} \cdot PCI_{CO}$$

En mode de fonctionnement riche, la puissance totale libérée lors de la régénération après correction sera :

$$W_{exo\_corr}(i) = Mod(i) \cdot dm_{O2} \cdot PCI_{O2}$$

En mode de fonctionnement pauvre, l'énergie libérée s'écrit alors :

$$\Delta H_{corr} = \int_{t0}^{tf} W_{exo\_corr} \cdot dt = \int_{t0}^{tf} Mod(i) \cdot dm_{COeq}.PCI_{CO} \cdot dt$$

En mode de fonctionnement riche, l'énergie libérée s'écrit de même :

$$\Delta H_{corr} = \int_{t0}^{tf} W_{exo\_corr} \cdot dt = \int_{t0}^{tf} Mod(i) \cdot dm_{O2}.PCI_{O2} \cdot dt$$

Afin de modéliser le champ de température dans le système de post traitement, on modélise ledit système en une succession de réacteurs parfaitement agités (RPAi) comme on peut le voir sur la figure 2. Ces réacteurs sont disposés en série, la température de sortie d'un réacteur étant la température d'entrée du réacteur suivant. On modélise généralement un système de post traitement avec moins d'une dizaine de réacteurs parfaitement agités. Il est à noter que ce nombre n'est dépendant que de la puissance de calcul qui peut être investie dans la modélisation.

Le dispositif 3 de répartition de l'énergie totale libérée comprend un moyen 3a de répartition de l'énergie totale libérée dans le système de post traitement. Le moyen 3a de répartition de l'énergie totale libérée reçoit en entrée la valeur corrigée de l'énergie totale libérée ΔHcorr par la connexion 298 et émet la fraction qexo_1 de la quantité d'énergie totale libérée ΔHcorr correspondant au premier réacteur parfaitement agité par la liaison 3b, la fraction qexo_2 correspondant au deuxième réacteur parfaitement agité par la liaison 3c et la fraction qexo_3 correspondant au troisième réacteur parfaitement agité par la liaison 3d. La répartition de la quantité totale d'énergie libérée est déterminée empiriquement. Elle correspond à une valeur qexo_1 égale à 80% de ΔHcorr, une valeur qexo_2 égale à 20% de ΔHcorr et des valeurs de qexo_i égales à 0% de ΔHcorr pour i supérieur ou égal à 3. La répartition est donnée ici à titre d'exemple, d'autres répartitions seraient possibles. Un nombre différent de réacteurs pourrait également être pris en compte.

Le moyen 4 de détermination de la température de sortie des différents réacteurs comprend un moyen de modélisation pour chaque réacteur parfaitement agité. Dans l'exemple illustré sur la figure 1, la modélisation du réacteur RPA1 est assurée par un moyen de modélisation 4c, la modélisation du réacteur RPA2 par un moyen de modélisation 4e et la modélisation du réacteur RPA3 par un moyen de modélisation 4g.

Le moyen de modélisation 4c du réacteur parfaitement agité RPA1 reçoit en entrée le débit massique des gaz d'échappement Qech par la liaison 4a, la température des gaz en entrée Te du système de post traitement par la liaison 4b et la fraction de l'énergie totale libérée qexo_1 à dissiper dans le réacteur parfaitement agité RPA1 par la liaison 3b. Le débit massique des gaz d'échappement Qech et la température Te sont déterminés par des moyens d'estimation non représentés. Le moyen de modélisation 4c émet en sortie par la liaison 4d, la valeur de la température en sortie Ts_1 du réacteur parfaitement agité RPA1. La même description s'applique aux deux autres réacteurs.

Le moyen de modélisation 4e du réacteur parfaitement agité RPA2 reçoit en entrée le débit des gaz d'échappement Qech par une dérivation de la liaison 4a, la température des gaz Ts_1 en sortie du réacteur parfaitement agité RPA1 par la liaison 4d et la fraction de l'énergie totale libérée qexo_2 à dissiper dans le réacteur parfaitement agité RPA2 par la liaison 3c. Le moyen 4e émet en sortie par la liaison 4f, la valeur de la température en sortie Ts_2 du réacteur parfaitement agité RPA2.

Le moyen de modélisation 4g du réacteur parfaitement agité RPA3 reçoit en entrée le débit des gaz d'échappement Qech par une dérivation de la liaison 4a, la température des gaz Ts_2 en sortie du réacteur parfaitement agité RPA2 par la liaison 4f et la fraction de l'énergie totale libérée qexo_3 à dissiper dans le réacteur parfaitement agité RPA3 par la liaison 3d. Le moyen 4g émet en sortie par la liaison 4h, la valeur de la température en sortie Ts_3 du réacteur parfaitement agité RPA3.

Pour calculer la température de sortie Ts_i d'un réacteur parfaitement agité courant RPAi, le moyen de modélisation réalise d'abord le bilan de l'énergie thermique dans le réacteur.

$$Ts\_i(t) = \frac{T_{cata}(t-1) \cdot m_{cata} \cdot Cp_{cata} + Te(t) \cdot Qech(t) \cdot Cp_{gaz} \cdot dt + q_{exo\_i}(t) \cdot dt}{m_{cata} \cdot Cp_{cata} + Qech(t) \cdot Cp_{gaz} \cdot dt} \qquad (3)$$

Avec

$m_{cata}$ = Masse de système de post traitement dans le réacteur courant RPAi

$q_{exo\_i}$ = Fraction de l'énergie totale libérée à dissiper sur le réacteur courant RPAi

Les différents termes de l'équation (3) peuvent être identifiés de la façon suivante. Le terme $T_{cata}(t-1) \cdot m \cdot Cp_{cata}$ est l'énergie emmagasinée dans le système de post traitement lors de l'itération précédente. Le terme $Te(t) \cdot Qech(t) \cdot Cp_{gaz} \cdot dt$ est la quantité de chaleur véhiculée par les gaz d'échappement. Le terme $q_{exo\_i}(t) \cdot dt$ est la quantité de chaleur dégagée lors de la régénération dans le réacteur courant RPAi, qexo_i étant la fraction de l'énergie totale libérée ΔHcorr à dissiper dans le réacteur parfaitement agité courant RPAi. Enfin, le terme $m \cdot Cp_{cata} + Qech(t) \cdot Cp_{gaz} \cdot dt$ est la capacité calorifique d'un réacteur courant RPAi, c'est-à-dire la somme du terme $m \cdot Cp_{cata}$ représentant la capacité calorifique du système de post traitement 5 et du terme $Qech(t) \cdot Cp_{gaz} \cdot dt$ représentant la capacité calorifique des gaz d'échappement contenus dans le réacteur courant RPAi.

La température de sortie Ts_i d'un réacteur courant RPAi est la température d'entrée Te_i+1 d'un réacteur RPAi+1 suivant le réacteur courant RPAi. Le premier réacteur de la série RPA1 utilise comme température d'entrée Te, la température des gaz en entrée du système de post traitement. Le dernier réacteur de la série permet d'obtenir la température de sortie Ts du système de post traitement 5.

Alternativement, la température de sortie Ts du système de post traitement 5 peut être déterminée en prenant en compte les pertes thermiques du système de post traitement 5. On ajoute alors le terme de pertes suivant :

$$T_{ext} \cdot S_{ext} \cdot H_{ext}(v_{veh}) \cdot dt$$

avec

$H_{ext}(v_{veh})$ = un facteur de convection externe

$v_{veh}$ = la vitesse du véhicule

$T_{ext}$ = la température extérieure

$S_{ext}$ = la surface de contact avec l'extérieur

Dans ce cas, l'équation (3) permettant de déterminer la température du système devient :

$$Ts(t) = \frac{T_{cata}(t-1) \cdot m \cdot Cp_{cata} + Te(t) \cdot Qech(t) \cdot Cp_{gaz} \cdot dt + T_{ext} \cdot S_{ext} \cdot H_{ext}(v_{veh}) \cdot dt + q_{exo}(t) \cdot dt}{m \cdot Cp_{cata} + Qech(t) \cdot Cp_{gaz} \cdot dt + S_{ext} \cdot H_{ext}(v_{veh}) \cdot dt}$$

Cependant, la correction de décalage n'est pas appliquée aux deux modes de fonctionnement utilisés lors d'une régénération d'un élément catalytique. En effet, les dispersions et dérives constatées en sortie de l'élément catalytique peuvent avoir plusieurs sources plus ou moins bien identifiées. Cependant la correction a pour but de s'assurer que l'estimation de la température de l'élément catalytique par un modèle physique est conforme aux températures réellement présentes dans l'élément catalytique. Pour cela, on part du principe qu'une seule variable du modèle présente des dispersions et des dérives, les autres étant considérées comme conformes aux mesures. La variable prise en compte est alors corrigée de façon à ce que le résultat de la modélisation soit conforme aux mesures effectuées, même si la variable corrigée ne nécessite pas de correction. De fait, elle devient une variable d'ajustement du modèle. Dans le cas présent, un des deux modes de combustion devient la variable d'ajustement du modèle. Un contrôle permanent de ce mode de combustion est assuré par mesure et afin de permettre l'ajustement du modèle. Cela est facilité par le fait que les deux modes de combustion se succèdent à un rythme élevé, de l'ordre de quelques dizaines de secondes. Un effet de moyenne entre les deux modes apparaît avant la prise de mesure. L'ajustement du modèle est alors sensible aux effets combinés des deux modes de combustion et reflète donc bien l'état thermique de l'élément catalytique.

Le dispositif d'adaptation peut être appliqué à la compensation des dispersions de fabrication ou à la correction d'une dérive relativement lente du système. Mais le dispositif d'adaptation pourrait également être utilisé pour le diagnostic de l'état de l'élément catalytique, un élément catalytique en fin de vie ayant une efficacité moindre et générant donc une quantité moindre d'énergie lors de la régénération.

**Revendications**

1. Procédé de correction de l'estimation par modèle physique de l'état thermique d'un système de post traitement (5) implanté dans la ligne d'échappement d'un moteur à combustion interne, **caractérisé par le fait que** l'on modélise l'énergie potentielle du système de post traitement ('5),
   on détermine une énergie potentielle mesurée fonction de mesures de température du système de post traitement (5), et
   on corrige l'effet des dérives et dispersions des différents organes ayant un impact sur l'état thermique du système de post traitement (5), en déterminant une énergie potentielle corrigée dépendant des énergies potentielles mesurées et modélisées.

2. Procédé selon la revendication 1, dans lequel on détermine l'énergie potentielle mesurée en réalisant un bilan thermique à partir des mesures de la température en entrée du système de post traitement (5), de la température en sortie du système de post traitement (5) et du mode de fonctionnement du moteur à combustion interne.

3. Procédé selon l'une des revendications précédentes, dans lequel on détermine l'énergie potentielle modélisée d'après le mode de fonctionnement du moteur à combustion interne et d'après le modèle physique mémorisé.

4. Procédé selon l'une des revendications précédentes, dans lequel on détermine une énergie potentielle corrigée en réalisant le produit de l'énergie potentielle modélisée et d'un facteur de correction issu de la somme pondérée du coefficient de correction du modèle physique de l'itération précédente et du rapport entre les énergies potentielles mesurées et modélisées.

5. Dispositif de correction de l'estimation par modèle physique de l'état thermique d'un système de post traitement implanté dans la ligne d'échappement d'un moteur à combustion interne pouvant fonctionner selon différents modes, **caractérise par le fait qu'**il comprend un capteur (8) de température en amont du système de post traitement (5), un capteur (9) de température en aval du système de post traitement (5), un moyen (28) de détermination de l'énergie potentielle mesurée et un moyen (29) de correction du modèle physique apte à modifier le résultat des calculs issus dudit modèle physique en fonction du signal reçu du moyen (26) de calcul contenant le modèle physique, du moyen (28) de détermination de l'énergie potentielle mesurée et des capteurs de température (8,9).

6. Dispositif selon la revendication 5 comprenant un moyen (26) de calcul contenant un modèle physique de l'énergie libérée lors de la régénération capable de déterminer l'énergie libérée lors de la régénération en fonction du mode de fonctionnement du moteur à combustion interne.

7. Dispositif selon l'une des revendications 5 ou 6, dans lequel le moyen (28) de détermination de l'énergie potentielle mesurée reçoit des signaux des capteurs de température en amont (8) et en aval (9) du système de post traitement afin de déterminer l'énergie libérée lors de la régénération en fonction de la température en amont et en aval du système de post traitement (5).

8. Dispositif selon l'une des revendications 5 à 7, dans lequel le système de post traitement comprend un piège catalytique.

9. Utilisation d'un dispositif selon l'une des revendications 5 à 8 pour diagnostiquer le vieillissement du système de post traitement (5) et/ou la dérive des modes de fonctionnement du moteur.

**Patentansprüche**

1. Verfahren zum Korrigieren der Schätzung mittels eines physikalischen Modells des thermischen Zustands eines in die Auslassleitung einer Brennkraftmaschine implantierten Nachverarbeitungssystems (5), **dadurch gekennzeichnet, dass** die potentielle Energie des Nachverarbeitungssystems (5) modelliert wird,
   eine gemessene potentielle Energie, die eine Funktion von Messungen der Temperatur des Nachverarbeitungssystems (5) ist, bestimmt wird und
   die Wirkung der Drifts und der Dispersionen der verschiedenen Organe, die einen Einfluss auf den thermischen Zustand des Nachverarbeitungssystems (5) haben, korrigiert wird, indem eine korrigierte potentielle Energie, die von den gemessenen und modellierten potentiellen Energien abhängt, bestimmt wird.

**2.** Verfahren nach Anspruch 1, wobei die gemessene potentielle Energie durch Verwirklichen einer Wärmebilanz anhand der Messungen der Temperatur am Eingang des Nachverarbeitungssystems (5), der Ausgangstemperatur des Nachverarbeitungssystems (5) und der Betriebsart der Brennkraftmaschine verwirklicht wird.

**3.** Verfahren nach einem der vorhergehenden Ansprüche, wobei die modellierte potentielle Energie entsprechend der Betriebsart der Brennkraftmaschine und entsprechend dem gespeicherten physikalischen Modell bestimmt wird.

**4.** Verfahren nach einem der vorhergehenden Ansprüche, wobei eine korrigierte potentielle Energie bestimmt wird, indem das Produkt aus der modellierten potentiellen Energie und aus einem Korrekturfaktor, der sich aus der gewichteten Summe des Korrekturfaktors des physikalischen Modells der vorhergehenden Iteration und aus dem Verhältnis zwischen dem gemessenen und modellierten potentiellen Energien ergibt, gebildet wird.

**5.** Vorrichtung zum Korrigieren der Schätzung mittels eines physikalisches Modells des thermischen Zustands eines Nachverarbeitungssystems, das in die Auslassleitung einer Brennkraftmaschine, die in verschiedenen Betriebsarten arbeiten kann, implantiert ist, **dadurch gekennzeichnet, dass** sie stromaufseitig des Nachverarbeitungssystems (5) einen Temperatursensor (8), stromabseitig des Nachverarbeitungssystems (5) einen Temperatursensor (9), ein Mittel (28) zum Bestimmen der gemessenen potentiellen Energie und ein Mittel (29) zum Korrigieren des physikalischen Modells, das das Ergebnis der Berechnungen, die sich aus dem physikalischen Modell ergeben, als Funktion des Signals, das von dem das physikalische Modell enthaltenden Rechenmittel (26), von dem Mittel (28) zum Bestimmen der gemessenen potentiellen Energie und von den Temperatursensoren (8, 9) empfangen wird, modifizieren kann, umfasst.

**6.** Vorrichtung nach Anspruch 5, die ein Rechenmittel (26) umfasst, das ein physikalisches Modell der bei der Regeneration frei werdenden Energie enthält und die frei werdende Energie bei der Regeneration als Funktion der Brennkraftmaschine bestimmen kann.

**7.** Vorrichtung nach einem der Ansprüche 5 oder 6, wobei das Mittel (28) zum Bestimmen der gemessenen potentiellen Energie Signale von dem stromaufseitigen Temperatursensor (8) und von dem stromabseitigen Temperatursensor (9) des Nachverarbeitungssystems empfängt, um die frei werdende Energie bei der Regeneration als Funktion der stromaufseitigen und der stromabseitigen Temperatur des Nachverarbeitungssystems (5) zu bestimmen.

**8.** Vorrichtung nach einem der Ansprüche 5 bis 7, wobei das Nachverarbeitungssystem einen katalytischen Abscheider umfasst.

**9.** Verwendung einer Vorrichtung nach einem der Ansprüche 5 bis 8, um die Alterung des Nachverarbeitungssystems (5) und/oder die Drift der Betriebsarten der Maschine zu diagnostizieren.

**Claims**

**1.** Method for correcting the estimation by physical model of the thermal state of a post-processing system (5) installed in the exhaust line of an internal combustion engine, **characterized in that** the potential energy of the post-processing system (5) is modelled,
a measured potential energy is determined that is a function of temperature measurements of the post-processing system (5), and
the effect of the drifts and dispersions of the different members having an impact on the thermal state of the post-processing system (5) is corrected, by determining a corrected potential energy dependent on the measured and modelled potential energies.

**2.** Method according to Claim 1, in which the measured potential energy is determined by producing a heat balance from measurements of the temperature at the input of the post-processing system (5), of the temperature at the output of the post-processing system (5) and of the operating mode of the internal combustion engine.

**3.** Method according to either of the preceding claims, in which the modelled potential energy is determined according to the operating mode of the internal combustion engine and according to the stored physical model.

**4.** Method according to one of the preceding claims, in which a corrected potential energy is determined by calculating the product of the modelled potential energy and of a correction factor derived from the weighted sum of the correction coefficient of the physical model from the preceding iteration and from the ratio between the measured and modelled potential energies.

5. Device for correcting the estimation by physical model of the thermal state of a post-processing system installed in the exhaust line of an internal combustion engine that can operate according to different modes, **characterized in that** it comprises a temperature sensor (8) upstream of the post-processing system (5), a temperature sensor (9) downstream of the post-processing system (5), a means (28) for determining the measured potential energy and a means (29) for correcting the physical model capable of modifying the result of the calculations derived from said physical model as a function of the signal received from the computation means (26) containing the physical model, from the means (28) for determining the measured potential energy and from the temperature sensors (8, 9).

6. Device according to Claim 5 comprising a computation means (26) containing a physical model of the energy released during regeneration capable of determining the energy released during regeneration as a function of the operating mode of the internal combustion engine.

7. Device according to either of Claims 5 and 6, in which the means (28) for determining the measured potential energy receives signals from the temperature sensors upstream (8) and downstream (9) of the post-processing system in order to determine the energy released during regeneration as a function of the temperature upstream and downstream of the post-processing system (5).

8. Device according to one of Claims 5 to 7, in which the post-processing system comprises a catalytic trap.

9. Use of a device according to one of Claims 5 to 8 to diagnose the ageing of the post-processing system (5) and/or the drift of the engine operating modes.

## FIG.1

Motif d'injection — 1a
Couple — 1b
Régime — 1c
Mode de combustion — 1d

1e

1 — Espèces émises et leur quantité associée

1f

2 — 21 — Quantité d'espèce limitante qui va réagir — 24 — $m_{eq}$ — 26 — 25 — 27

22 — Espèce limitante — 23

8a — 9a — 28

292
/ — 293
294
295
296
X — 297
298

29
291

$q_{exo\_total}$

3a

$q_{exo\_1}$
$q_{exo\_2}$ — 3b
$q_{exo\_3}$ — 3c
3d

3

4a — $RPA_1$ — $RPA_2$ — $RPA_3$
$Q_{ech}$
$T_e$ — $T_{s\_1}$ — $T_{s\_2}$ — $T_{s\_3}=T_s$
4b — 4d — 4f — 4h
4c — 4e — 4g

4

EP 2 147 200 B1

## FIG.2

5

6

7

8   8a

9   9a

$RPA_1$

$RPA_2$

$RPA_i$

$RPA_{n-1}$

$RPA_n$

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2853691
- EP 1067279 A
- US 2005103099 A